# EUROPEAN PATENT SPECIFICATION

(11) **EP 3 767 421 B1**
(45) Date of publication and mention of the grant of the patent: **22.03.2023**
(21) Application number: 20186337.0
(22) Date of filing: 16.07.2020
(51) Int. Cl.: G05D 1/02, G08G 1/00

(54) **IMPROVED DRIVING SYSTEM FOR A CONVOY OF VEHICLES CONFIGURED FOR DRIVING IN PLATOONING MODE**
VERBESSERTES, ZUM FAHREN IM ZUGMODUS KONFIGURIERTES ANTRIEBSSYSTEM FÜR EINEN KONVOI VON FAHRZEUGEN
SYSTÈME DE CONDUITE AMÉLIORÉ POUR UN CONVOI DE VÉHICULES CONFIGURÉ POUR ROULER EN MODE FORMATION DE PELOTON

(30) Priority: 16.07.2019 IT 201900011883
(43) Date of publication of application: 20.01.2021
(73) Proprietor: Iveco S.p.A., 10156 Torino (IT)
(72) Inventor: Paolini, Federico, 19038 Sarzana (SP) (IT); Sarcoli, Alessio, 10141 Torino (IT); Liga, Valerio, 10143 Torino (IT); De Somma, Michele, 10136 Torino (IT)
(74) Representative: Faraldi, Marco

(56) References cited:
- WO-A1-2014/133425
- DE-A1-102017 009 306
- US-A1- 2013 080 018
- US-A1- 2019 129 447

## Description

### TECHNICAL FIELD

This invention relates to a driving system for a convoy of vehicles configured for driving in platooning mode.

### KNOWN PRIOR ART

Heavy goods vehicles, such as lorries, can travel in so-called "platooning" mode, i.e. a mode in which the vehicles in a convoy of vehicles share operational information with each other in order to develop a control strategy to automatically drive a series of follower vehicles in relation to a leading vehicle (EGO vehicle).

The leading vehicle includes an electronic control unit configured to calculate, known speeds and relative positions of the follower vehicles, control parameters of the vehicles themselves in order to decrease aerodynamic drag by taking advantage of the wake of the vehicles that are in line one after the other. This mechanism allows significant reductions in fuel consumption on motorways to the order of 10-20%. The driver of each vehicle can always take precedence over the automatic controls and, therefore, change trajectory/speed if necessary.

The communication of the data necessary for calculating the platooning mode between the vehicles is carried out using a plurality of technologies such as radar, GPS, Wi-Fi, etc.; this communication by means of radio waves is accomplished thanks to known antennas. In addition, the vehicles may include sensor means, e.g. optical or ultrasonic ones, configured to calculate distances between vehicles in the platooning convoy or other vehicles in the vicinity of the

platooning convoy. Data communication is usually V2V (Vehicle-to-Vehicle), i.e. from vehicle to vehicle, or, in some cases, it can be in I2V (Infrastructure-to-Vehicle) mode, i.e. from infrastructure to vehicle.

Given the above, the reduction in fuel consumption that can be achieved with a convoy of vehicles driving in platooning mode is greatly affected by the wind conditions along the route of that convoy.

In fact, a crosswind in relation to the convoy's driving direction, in the worst case perpendicular to it, tends to reduce the aerodynamic advantages of driving in platooning mode, particularly in terms of fuel economy.

Known systems are disclosed in documents US2019/129447 A1, WO20141333425 A1, US2013080018 A1 or DE 102017009306A1.

There is, therefore, a need to improve the known systems for driving convoys of vehicles in platooning mode, in order to improve their performance in case of wind along the route of the vehicle convoy.

The purpose of this invention is to fulfill the above requirements.

### SUMMARY OF THE INVENTION

This purpose is achieved with a vehicle configured for driving in platooning mode and its system and method, as claimed in the attached claims.

### BRIEF DESCRIPTION OF THE DRAWINGS

In order to better understand this invention, a preferred embodiment thereof will now be described by way of nonlimiting example and with reference to the accompanying drawings, in which:
- Figure 1 is a schematic view from above of a convoy of vehicles in platooning mode in a first operating condition according to the invention; and
- Figure 2 is a schematic view from above of a convoy of vehicles in platooning mode in a second operating condition according to the invention.

### DETAILED DESCRIPTION OF THE INVENTION

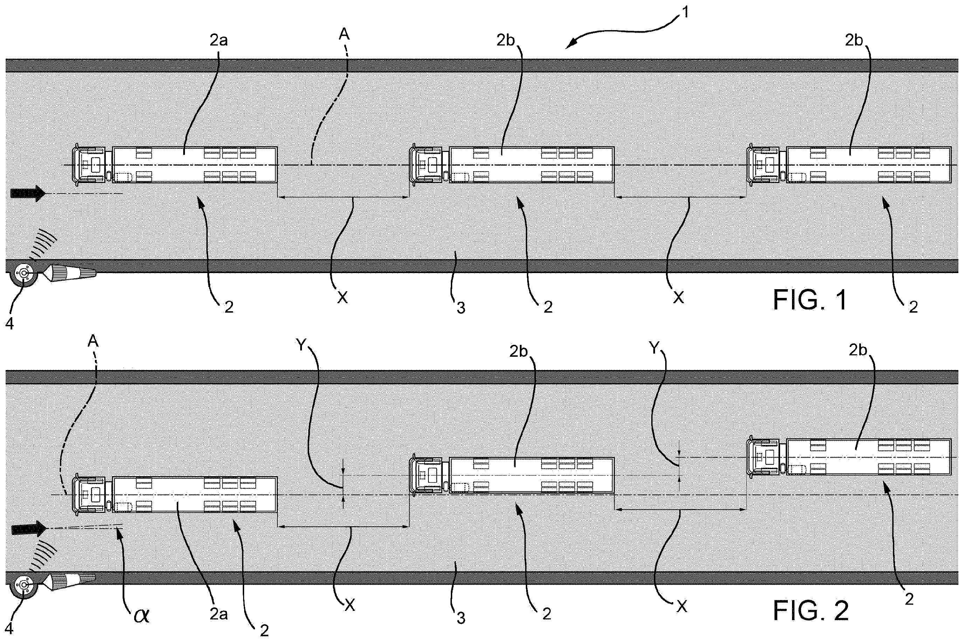

Figures 1 and 2 show a convoy 1 of vehicles 2 in platooning mode comprising, in detail, a first leader vehicle 2a and a series of follower vehicles 2b driving along a road 3.

As is well known, each vehicle includes communication means, which are known and not illustrated, configured to allow communication between platooning vehicles 2 and an electronic control unit, which is known and not illustrated, electrically connected to the communication means and comprising processing means configured to receive and process information received through the communication means and to command the vehicle 2 accordingly.

Conveniently, as known, each vehicle 2 also comprises sensors (not illustrated) for example, optical or ultrasonic ones, configured to calculate distances between platooning vehicles 2 in the convoy 1 or of other vehicles near the latter.

The sensors are electrically connected to the corresponding electronic control unit of each vehicle that is configured to acquire the relevant data. In particular, each electronic control unit of the vehicles 2 in the convoy 1 is configured to process the data coming from each vehicle 2 and also to control, as a consequence, their speed.

In particular, according to the example in Figure 1, the electronic units of each vehicle are configured to control the speed of the vehicles along a common axis A common to the longitudinal axis of each vehicle 2 and to a distance X between one vehicle 2 and the other. The sensor means are, thus, configured to evaluate the longitudinal distance, that is along this axis A, between vehicle 2 and vehicle 2 and the transverse distance, that is perpendicular to this axis A, between vehicle 2 and vehicle 2.

According to the invention, the electronic units of each vehicle 2 are configured to acquire data relating to the wind currently acting on the convoy 1 and to process, as a result, a transverse movement of a vehicle 2 in relation to the other so as to minimise the aerodynamic drag of the convoy 1, taking into account the action of the wind on the convoy, thus improving fuel consumption.

In particular, the transverse movement, that is, in the direction perpendicular to the axis A (see Figure 2), of a quantity calculated Y by the electronic unit, can be controlled via the sensor means using known controls, for example a closed-ring control.

In the embodiment described, the wind acts in a partly lateral direction at an angle α on the convoy 1 and the first follower vehicle 2b moves in relation to the axis A by a transverse distance Y in relation to the leader vehicle 2a and, similarly, the second follower vehicle 2b moves in relation to the first follower vehicle 2b by an equal transverse distance Y.

It is clear that the value of the wind along the path of the convoy 1 can be acquired in various ways and can be acquired directly by the control unit of the vehicles 2, for example using electromagnetic signals transmitted by a control exchange or using communication means placed along the infrastructure itself, that is, the road 3.

In the case described along the road 3, means of measuring the direction and intensity of the wind, such as wind gauges 4, can be arranged. These are configured to locally acquire the intensity and direction values of the wind and are configured to communicate these values with the convoy 1.

The operation of a convoy 1 of platooning vehicles 2 according to the invention is the following.

Referring to Figure 2, a condition in which the wind is parallel to the axis A is illustrated (or it could also be absent). In this condition, the electronic unit of each vehicle 2 just controls the longitudinal distance X between these.

In the case of Figure 2, as mentioned above, in which there is a wind inclined by an angle α in relation to the axis A, the electronic unit of each vehicle controls both the longitudinal distance X and the transverse distance Y between the vehicles 2 in order to minimise the aerodynamic drag as much as possible.

This optimisation can be achieved according to any possible optimisation method, when the speed of the convoy 1, the intensity and direction of the wind, as well as, obviously, the shape and number of vehicles 2 in the convoy are known. For example, if the shape of the vehicles 2 is known, a formula that is the function of the remaining variables mentioned above can be created, or, a series of maps of values tabulated as a function of one or more of the above-mentioned variables.

The invention also relates to a method for controlling a convoy 1 of platooning vehicles 2 described above, comprising the steps of:
- acquiring the intensity and the direction of the wind along the road 3 locally travelled by the convoy 1;
- transmitting these values to at least one of the electronic units of the convoy 1;
- calculating a transverse distance value between the vehicles 2 that minimises the aerodynamic drag due to the wind; and
- transversally moving the vehicles 2 according to this value calculated in the preceding step.

Obviously, the method also comprises the step of keeping this configuration until the value/intensity of the wind along the road 3 changes. In particular, this control can be achieved continuously or discreetly, for example, at a pre-set distance. According to the example described, the method mentioned above can be restarted, and, thus, the transverse distance between the vehicles 2 modified, at every step with measuring means, such as any sensor wind gauge 4 of the type described above.

The advantages of a convoy 1 of platooning vehicles 2 according to the invention are apparent from the above description.

Thanks to the driving system for a convoy 1 of platooning vehicles 2, it is possible to consider the aerodynamic disturbances owing to the wind, in order to minimise the aerodynamic drag of the convoy, taking this variable into account. In this way, it is possible, therefore, to save fuel, given the reduced aerodynamic drag.

The method described above can be loaded as dedicated software into the electronic units of the vehicles 2 and, therefore, be automatically controlled in a simple way, without any need to modify the vehicles 2.

Providing sensor wind gauges 4 along the road 3 makes it possible to discreetly control, at points of greater interest along the road, i.e. where the wind can have a significant/greater effect, of the precise characteristics of the direction and intensity of the wind along road 3.

Finally, it is clear that the convoy 1 of platooning vehicles 2 according to this invention can be modified and variations can be made without departing from the scope of this invention, as set forth in the claims.

As mentioned, the intensity and direction value of the wind can be acquired from the convoy 1 in various modes, just as the relative movement between the vehicles 2 can be achieved in any known way.

## Claims

1. A driving system comprising a convoy of vehicles in platooning mode, each vehicle (2) for driving on a road (3) comprising an electronic control unit provided with processing means configured to enable driving said vehicle (2) in platooning mode with respect to at least one further vehicle (2) in said convoy (1) of vehicles in platooning mode,
said driving in platooning mode comprising the control of a longitudinal distance along an axis (A) of said vehicles (2) in line one after the other,
said electronic control unit being configured to acquire data relative to the intensity and direction of the wind with respect to the axis (A) and being configured to consequently calculate a transverse distance value between said vehicles (2) that minimises the aerodynamic resistance due to said wind, said transverse distance being the perpendicular distance of a vehicle (2) with respect to said axis (A), and configured to transversally moving said vehicles (2) according to said value calculated in the preceding step
wherein said system comprises acquisition means for values relative to the intensity and direction of the wind with respect to the axis (A), said acquisition means being installed along said road (3), said acquisition means being configured to enable the communication of said intensity and direction values of said wind to said convoy (1) or to said vehicles (2),
**characterized in that** the driving system is configured in a way that said communication is carried out at pre-set distances along said road when said convoy intersects said acquisition means.

2. Driving system according to claim 1, wherein each vehicle (2) comprises communication means configured to acquire data relative to said intensity and direction of the wind with respect to said axis (A) provided by said acquisition means

3. Driving system according to claim 1 or 2, wherein said acquisition means comprise wind gauges (4) installed along the edges of said road (3), said acquisition means further comprising telecommunication means configured to enable acquisition of the data of said wind gauges (4) to said convoy (1) or said vehicles (2).

4. A method for controlling a convoy (1) of vehicles (2) in a driving system according to any of the preceding claims comprising the steps of:
• acquiring the intensity and the direction of the wind along said road (3) locally travelled by said convoy (1);
• transmitting said values to at least one of the electronic units of said convoy (1);
• calculating a transverse distance value between said vehicles (2) that minimises the aerodynamic resistance due to the wind; and
• transversally moving said vehicles (2) according to said value calculated in the preceding step.

5. The control method according to claim 4, wherein said steps of said method are carried out cyclically in a continuous manner along the path of said convoy (1).

6. The control method according to claim 5, wherein said steps of said method are carried out at pre-set distances along said road (3), when said convoy (1) intersects said acquisition means.

## Patentansprüche

1. Ein Fahrssystem, umfassend einen Konvoi von Fahrzeugen im Platooning-Modus, wobei jedes Fahrzeug (2) zum Fahren auf einer Straße (3) eine elektronische Steuereinheit umfasst, die mit Verarbeitungsmitteln ausgestattet ist, die dazu eingerichtet sind, das Fahren des Fahrzeugs (2) im Platooning-Modus, in Bezug auf zumindest ein weiteres Fahrzeug (2) aus dem Konvoi (1) von Fahrzeugen im Platooning-Modus, zu ermöglichen,
wobei das Fahren im Platooning-Modus das Steuern eines Längsabstands entlang einer Achse (A) der hintereinander angeordneten Fahrzeuge (2) umfasst,
wobei die elektronische Steuereinheit dazu eingerichtet ist, Daten relativ zur Intensität und Richtung eines Windes in Bezug auf die Achse (A) zu erfassen, dazu eingerichtet ist, daraus einen Querabstandswert zwischen den Fahrzeugen (2) zu berechnen, der einen aerodynamischen Widerstand aufgrund des Windes minimiert, wobei der Querabstand ein senkrechter Abstand eines Fahrzeugs (2) in Bezug auf die Achse (A) ist, und dazu eingerichtet ist, die Fahrzeuge (2) gemäß dem im vorhergehenden Schritt berechneten Wert in Querrichtung zu bewegen,
wobei das System Erfassungsmittel für Werte relativ zur Intensität und Richtung des Windes in Bezug auf die Achse (A) umfasst, wobei die Erfassungsmittel entlang der Straße (3) angeordnet sind, und wobei die Erfassungsmittel dazu eingerichtet sind, ein Kommunizieren der Intensitäts- und Richtungswerte des Windes zum Konvoi (1) oder zu den Fahrzeugen (2) zu ermöglichen,
**dadurch gekennzeichnet, dass** das Fahrssystem derart eingerichtet ist, dass das Kommunizieren in vorgegebenen Abständen entlang der Straße (3) erfolgt, wenn der Konvoi (1) die Erfassungsmittel kreuzt.

2. Fahrssystem nach Anspruch 1, wobei jedes Fahrzeug (2) Kommunikationsmittel umfasst, die eingerichtet sind, Daten bezüglich der Intensität und Richtung des Windes in Bezug auf die Achse (A) zu erfassen, die von den Erfassungsmitteln zur Verfügung gestellt werden.

3. Fahrssystem nach Anspruch 1 oder 2, wobei die Erfassungsmittel Windmesser (4) umfassen, die entlang der Ränder der Straße (3) angeordnet sind, und wobei die Erfassungsmittel ferner Telekommunikationsmittel umfassen, die dazu eingerichtet sind, dem Konvoi (1) oder den Fahrzeugen (2) das Erfassen der Daten der Windmesser (4) zu ermöglichen.

4. Ein Verfahren zum Steuern eines Konvois (1) von Fahrzeugen (2) in einem Fahrssystem nach einem der vorhergehenden Ansprüche, umfassend die folgenden Schritte:
- Erfassen der Intensität und der Richtung eines Windes entlang einer lokal vom Konvoi (1) befahrenen Straße (3);
- Übermitteln der Werte an zumindest eine der elektronischen Steuereinheiten des Konvois (1);
- Berechnen eines Querabstandswertes zwischen den Fahrzeugen (2), der einen aerodynamischen Widerstand aufgrund des Windes minimiert; und
- Querbewegen der Fahrzeuge (2) gemäß dem im vorhergehenden Schritt berechneten Wert.

5. Das Steuerungsverfahren nach Anspruch 4, wobei die Schritte des Verfahrens zyklisch in kontinuierlicher Weise entlang eines Fahrweges des Konvois (1) ausgeführt werden.

6. Das Steuerungsverfahren nach Anspruch 5, wobei die Schritte des Verfahrens in vorgegebenen Abständen entlang der Straße (3) ausgeführt werden, wenn der Konvoi (1) die Erfassungsmittel kreuzt.

## Revendications

1. Système de conduite comprenant un convoi de véhicules en mode de circulation en convoi automatisé, chaque véhicule (2) devant être conduit sur une route (3) comprenant une unité de commande électronique pourvue de moyens de traitement configurés pour permettre la conduite dudit véhicule (2) en mode de circulation en convoi automatisé par rapport à au moins un autre véhicule (2) dans ledit convoi (1) de véhicules en mode de circulation en convoi automatisé,
ladite conduite en mode de circulation en convoi automatisé comprenant la commande d'une distance longitudinale le long d'un axe (A) desdits véhicules (2) en ligne l'un après l'autre,
ladite unité de commande électronique étant configurée pour acquérir des données relatives à l'intensité et à la direction du vent par rapport à l'axe (A) et étant configurée pour calculer en conséquence une valeur de distance transversale entre lesdits véhicules (2) qui minimise la résistance aérodynamique due audit vent, ladite distance transversale étant la distance perpendiculaire d'un véhicule (2) par rapport audit axe (A), et configurée pour déplacer transversalement lesdits véhicules (2) selon ladite valeur calculée à l'étape précédente
dans lequel ledit système comprend des moyens d'acquisition de valeurs relatives à l'intensité et à la direction du vent par rapport à l'axe (A), lesdits moyens d'acquisition étant installés le long de ladite route (3), lesdits moyens d'acquisition étant configurés pour permettre la communication desdites valeurs d'intensité et de direction dudit vent audit convoi (1) ou auxdits véhicules (2),
**caractérisé en ce que** le système de conduite est configuré de manière à ce que ladite communication soit effectuée à des distances prédéfinies le long de ladite route lorsque ledit convoi croise lesdits moyens d'acquisition.

2. Système de conduite selon la revendication 1, dans lequel chaque véhicule (2) comprend des moyens de communication configurés pour acquérir des données relatives à ladite intensité et à ladite direction du vent par rapport audit axe (A) fournies par lesdits moyens d'acquisition.

3. Système de conduite selon la revendication 1 ou 2, dans lequel lesdits moyens d'acquisition comprennent des anémomètres (4) installés le long des bords de ladite route (3), lesdits moyens d'acquisition comprenant en outre des moyens de télécommunication configurés pour permettre l'acquisition des données desdits anémomètres (4) par ledit convoi (1) ou lesdits véhicules (2).

4. Procédé pour commander un convoi (1) de véhicules (2) dans un système de conduite selon l'une quelconque des revendications précédentes comprenant les étapes :
• d'acquisition de l'intensité et de la direction du vent le long de ladite route (3) parcourue localement par ledit convoi (1) ;
• de transmission desdites valeurs à au moins une des unités électroniques dudit convoi (1) ;
• de calcul d'une valeur de distance transversale entre lesdits véhicules (2) qui minimise la résistance aérodynamique due au vent ; et
• de déplacement transversal desdits véhicules (2) selon ladite valeur calculée à l'étape précédente.

5. Procédé de commande selon la revendication 4, dans lequel lesdites étapes dudit procédé sont effectuées cycliquement de manière continue le long du trajet dudit convoi (1).

6. Procédé de commande selon la revendication 5, dans lequel lesdites étapes dudit procédé sont effectuées à des distances prédéfinies le long de ladite route (3), lorsque ledit convoi (1) croise lesdits moyens d'acquisition.
